# EUROPEAN PATENT APPLICATION

(11) **EP 4 582 171 A1**
(43) Date of publication of application: **09.07.2025**
(21) Application number: 23860339.3
(22) Date of filing: 29.08.2023
(51) Int. Cl.: B01D 53/14, B01D 53/18

(54) **ACIDIC-GAS ADSORPTION DEVICE**

(30) Priority: 01.09.2022 JP 2022139533
(71) Applicant: NGK Insulators, Ltd., Nagoya-shi, Aichi 467-8530 (JP)
(72) Inventor: ANDO, Junichi, Nagoya-shi, Aichi 467-8530 (JP); TAKAHASHI, Michio, Nagoya-shi, Aichi 467-8530 (JP); OKUMA, Yusuke, Nagoya-shi, Aichi 467-8530 (JP); IIDA, Kazuki, Nagoya-shi, Aichi 467-8530 (JP); KAN, Hirofumi, Nagoya-shi, Aichi 467-8530 (JP); SHIBAGAKI, Yukinari, Nagoya-shi, Aichi 467-8530 (JP); MAEHARA, Sota, Nagoya-shi, Aichi 467-8530 (JP)
(74) Representative: MERH-IP Matias Erny Reichl Hoffmann Patentanwälte PartG mbB
(86) International application number: PCT/JP2023/031206
(87) International publication number: WO 2024/048577

(57) **Abstract**

Provided is an acid gas adsorption device capable of improving acid gas adsorption efficiency. The acid gas adsorption device according to an embodiment of the present invention includes: an acid gas adsorption part that allows passage of a fluid in a predetermined direction; and one case. The acid gas adsorption part includes an acid gas adsorption material capable of adsorbing an acid gas. The acid gas adsorption part includes: a first adsorption portion; and a second adsorption portion arranged on a downstream side of the first adsorption portion in a direction of passage of the fluid. The first adsorption portion includes a first acid gas adsorption material having a relatively small adsorption force for adsorbing the acid gas and a relatively large adsorption capacity for the acid gas. The second adsorption portion includes a second acid gas adsorption material having a relatively large adsorption force for adsorbing the acid gas and a relatively small adsorption capacity for the acid gas. The one case houses the first adsorption portion and the second adsorption portion together.

## Description

### Technical Field

The present invention relates to an acid gas adsorption device.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed a gas separation unit including a carbon dioxide adsorption part having a pellet structure (see, for example, Patent Literature 1). In such a carbon dioxide adsorption device, a carbon dioxide adsorption material adsorbs CO₂ at a predetermined adsorption temperature and desorbs CO₂ at a desorption temperature exceeding the adsorption temperature. In such a carbon dioxide adsorption device, it has been desired that CO₂ adsorption efficiency be improved.

### Citation List

### Patent Literature

[PTL 1] WO 2014/170184 A1

### Summary of Invention

### Technical Problem

A primary object of the present invention is to provide an acid gas adsorption device capable of improving acid gas adsorption efficiency.

### Solution to Problem

[1] According to an embodiment of the present invention, there is provided an acid gas adsorption device including an acid gas adsorption part that allows passage of a fluid in a predetermined direction. The acid gas adsorption part includes an acid gas adsorption material capable of adsorbing an acid gas. The acid gas adsorption part includes: a first adsorption portion; and a second adsorption portion arranged on a downstream side of the first adsorption portion in a direction of passage of the fluid. The first adsorption portion includes a first acid gas adsorption material having a relatively small adsorption force for adsorbing the acid gas and a relatively large adsorption capacity for the acid gas. The second adsorption portion includes a second acid gas adsorption material having a relatively large adsorption force for adsorbing the acid gas and a relatively small adsorption capacity for the acid gas.
[2] In the acid gas adsorption device according to the above-mentioned item [1], the acid gas may be carbon dioxide.
[3] In the acid gas adsorption device according to the above-mentioned item [1] or [2], an acid gas concentration at equilibrium of the first acid gas adsorption material may exceed 100 ppm, and an acid gas concentration at equilibrium of the second acid gas adsorption material may be 100 ppm or less.
[4] In the acid gas adsorption device according to the above-mentioned item [3], the first acid gas adsorption material may contain a tertiary amino group, and the second acid gas adsorption material may contain a primary amino group and/or a secondary amino group.
[5] In the acid gas adsorption device according to any one of the above-mentioned items [1] to [4], the first adsorption portion may be divided into a plurality of blocks in a direction orthogonal to the direction of passage of the fluid.
[6] In the acid gas adsorption device according to any one of the above-mentioned items [1] to [4], the second adsorption portion may be divided into a plurality of blocks in a direction orthogonal to the direction of passage of the fluid.
[7] The acid gas adsorption device according to any one of the above-mentioned items [1] to [6] may further include one case. The one case may house the first adsorption portion and the second adsorption portion together.

### Advantageous Effects of Invention

According to the embodiments of the present invention, the acid gas adsorption device capable of improving acid gas adsorption efficiency can be achieved.

### Brief Description of Drawings

FIG. 1 is a schematic configuration view of an acid gas adsorption device according to one embodiment of the present invention.
FIG. 2 is a schematic configuration view of an acid gas adsorption device according to another embodiment of the present invention.
FIG. 3 is a schematic configuration view of an acid gas adsorption device according to still another embodiment of the present invention.
FIG. 4 is a schematic configuration view of an acid gas adsorption device according to still another embodiment of the present invention.
FIG. 5 is a schematic configuration view of an acid gas adsorption device according to still another embodiment of the present invention.
FIG. 6 is a schematic configuration view of an acid gas adsorption device according to still another embodiment of the present invention.
FIG. 7 is a schematic configuration view of an acid gas adsorption device according to still another embodiment of the present invention.
FIG. 8 is a schematic configuration view of a first block of FIG. 6 according to one embodiment.
FIG. 9 is a schematic configuration view of a first block of FIG. 6 according to another embodiment.
FIG. 10 is an axial sectional view of the first block of FIG. 9.

### Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are merely an example, and do not limit understanding of the present invention.

### A. Overview of Acid Gas Adsorption Device

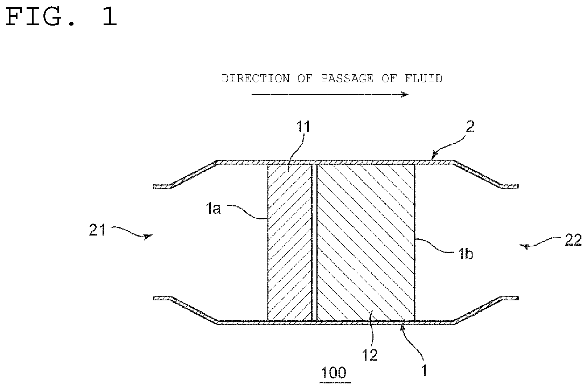

FIG. 1 is a schematic configuration view of an acid gas adsorption device according to one embodiment of the present invention.

An acid gas adsorption device 100 of the illustrated example includes an acid gas adsorption part 1 that allows passage of a fluid in a predetermined direction. The acid gas adsorption part 1 includes an acid gas adsorption material capable of adsorbing an acid gas. The acid gas adsorption part 1 includes: a first adsorption portion 11; and a second adsorption portion 12 arranged on a downstream side of the first adsorption portion 11 in a direction of passage of the fluid. The first adsorption portion 11 includes a first acid gas adsorption material having a relatively small adsorption force for adsorbing an acid gas and a relatively large adsorption capacity for the acid gas. The second adsorption portion 12 includes a second acid gas adsorption material having a relatively large adsorption force for adsorbing the acid gas and a relatively small adsorption capacity for the acid gas. In other words, the adsorption force of the first acid gas adsorption material for the acid gas is smaller than the adsorption force of the second acid gas adsorption material for the acid gas, and the adsorption capacity of the first acid gas adsorption material for the acid gas is larger than the adsorption capacity of the second acid gas adsorption material for the acid gas.

In the acid gas adsorption device, a fluid containing an acid gas is supplied to the acid gas adsorption part, in which the acid gas adsorption material adsorbs the acid gas. Thus, a concentration of the acid gas in the fluid decreases toward the downstream side in the direction of passage of the fluid. When the same acid gas adsorption material is included throughout the entire acid gas adsorption part, the concentration of the acid gas is relatively high in an upstream-side portion of the acid gas adsorption part. Thus, the acid gas adsorption material can adsorb the acid gas. Meanwhile, the concentration of the acid gas is relatively low in a downstream-side portion of the acid gas adsorption part. Thus, the acid gas adsorption material cannot sufficiently adsorb the acid gas in some cases.

Meanwhile, according to one embodiment of the present invention, the first adsorption portion, which is positioned on an upstream side in the direction of passage of the fluid, includes the first acid gas adsorption material having an adsorption capacity for the acid gas larger than that of the second acid gas adsorption material. Thus, the first acid gas adsorption material can sufficiently adsorb the acid gas from the fluid having a relatively high concentration of the acid gas. Further, the second adsorption portion, which is positioned on the downstream side in the direction of passage of the fluid, includes the second acid gas adsorption material having an adsorption force for the acid gas larger than that of the first acid gas adsorption material. Thus, even when the concentration of the acid gas in the fluid that has passed through the first adsorption portion is relatively low, the second acid gas adsorption material can stably adsorb the acid gas from the fluid. Accordingly, as compared to a case in which the same acid gas adsorption material is included throughout the entire acid gas adsorption part, an improvement in adsorption performance of the entire acid gas adsorption device can be achieved.

Examples of the acid gas to be adsorbed in the acid gas adsorption device include carbon dioxide (CO₂), hydrogen sulfide, sulfur dioxide, nitrogen dioxide, dimethyl sulfide (DMS), and hydrogen chloride. In one embodiment, the acid gas is carbon dioxide (CO₂), and the fluid is a CO₂-containing gas. The CO₂-containing gas may contain nitrogen in addition to CO₂. The CO₂-containing gas is typically air (atmosphere). A concentration of CO₂ in the CO₂-containing gas before being supplied to the acid gas adsorption device is, for example, 100 ppm (on a volume basis) or more and 2 vol% or less.

Now, description is given in detail of a case in which the acid gas is carbon dioxide (CO₂).

The adsorption capacity for CO₂ (hereinafter referred to as "CO₂ adsorption capacity") of the first acid gas adsorption material is larger than the CO₂ adsorption capacity of the second acid gas adsorption material. The adsorption force for CO₂ (hereinafter referred to as "CO₂ adsorption force") of the first acid gas adsorption material is smaller than the CO₂ adsorption force of the second acid gas adsorption material.

The CO₂ adsorption capacity of the acid gas adsorption material is the amount of substance of CO₂ that can be adsorbed by 1 kg of the acid gas adsorption material (when the acid gas adsorption material is supported by a porous carrier, a total of 1 kg of the acid gas adsorption material and the porous carrier) under conditions of 25°C, 50%RH, and a CO₂ partial pressure of 15 kPa (the same applies hereinafter).

The CO₂ adsorption capacity of the first acid gas adsorption material is, for example, 1.5 mol/kg-adsorption material or more, preferably 2.0 mol/kg-adsorption material or more, more preferably 2.5 mol/kg-adsorption material or more. The CO₂ adsorption capacity can be measured by, for example, a method described in Document 3-2-1, the Second Review Meeting (2) on Carbon Dioxide Capture and Storage in 2015 (the same applies hereinafter).

The CO₂ adsorption force of the first acid gas adsorption material can be evaluated based on an acid gas concentration at equilibrium (CO₂ concentration at equilibrium). The CO₂ adsorption force of the acid gas adsorption material becomes weaker as the acid gas concentration at equilibrium (CO₂ concentration at equilibrium) becomes higher, and becomes stronger as the acid gas concentration at equilibrium (CO₂ concentration at equilibrium) becomes lower.

The acid gas concentration at equilibrium (CO₂ concentration at equilibrium) of the first acid gas adsorption material is, for example, more than 100 ppm, preferably more than 200 ppm, more preferably more than 300 ppm, and is, for example, 500 ppm or less. The acid gas concentration at equilibrium can be measured, for example, in the following manner. Inside a desiccator in which the atmosphere at 25°C and 50%RH is enclosed, the acid gas adsorption material having a larger excess of adsorption capacity than the acid gas contained in the desiccator is placed. After elapse of four hours, the concentration of the acid gas in the desiccator is measured by quantitative analysis using an infrared spectrometer (the same applies hereinafter).

When the concentration of CO₂ is relatively high (when the concentration of CO₂ exceeds the lower limit (typically, 100 ppm) of the acid gas concentration at equilibrium of the first acid gas adsorption material) even while the CO₂ adsorption force of the first acid gas adsorption material is equal to or smaller than the upper limit described above, the first acid gas adsorption material can adsorb a relatively large volume (equal to or larger than the above-mentioned lower limit of the CO₂ adsorption capacity) of CO₂. Further, typically, as the CO₂ adsorption force of the acid gas adsorption material increases, energy that is required for desorption of CO₂ from the acid gas adsorption material increases. Thus, when the CO₂ adsorption force of the first acid gas adsorption material is equal to or smaller than the above-mentioned upper limit, energy required in a desorption step described later can be reduced.

An acid gas concentration at equilibrium (CO₂ concentration at equilibrium) of the second acid gas adsorption material is, for example, 100 ppm or less, preferably 75 ppm or less, more preferably 50 ppm or less, and is, for example, 10 ppm or more.

The CO₂ adsorption capacity of the second acid gas adsorption material is, for example, less than 2.0 mol/kg-adsorption material, preferably less than 1.5 mol/kg-adsorption material, more preferably 1.0 mol/kg-adsorption material or less, and is, for example, 0.5 mol/kg-adsorption material or more.

Even when the concentration of CO₂ is relatively low (when the concentration of CO₂ is equal to or lower than the lower limit (typically, 100 ppm) of the acid gas concentration at equilibrium of the first acid gas adsorption material), the second acid gas adsorption material can stably adsorb CO₂ as long as the CO₂ adsorption force of the second acid gas adsorption material is equal to or more than the lower limit described above. Further, even when the CO₂ adsorption capacity of the second acid gas adsorption material is equal to or less than the upper limit described above, the first acid gas adsorption material has adsorbed a relatively large volume of CO₂ on the upstream side, and hence acid gas adsorption efficiency is not reduced in the entire acid gas adsorption device.

The first acid gas adsorption material that can adsorb CO₂ typically contains at least a tertiary amino group. The first acid gas adsorption material may contain only a tertiary amino group as an amino group, or may contain a primary amino group and/or a secondary amino group in addition to the tertiary amino group.

An example of the first acid gas adsorption material having a tertiary amino group is a nitrogen-containing compound having a tertiary amino group, and specific examples thereof include: tertiary amines, such as methyldiethylamine and triethanolamine; substituted piperazine compounds such as 1-(2-hydroxyethyl) piperazine; a branched polyethyleneimine having a primary amino group to tertiary amino group; and an organic/inorganic compound having imparted thereto a tertiary amino group as a substituent. Such first acid gas adsorption materials may be used alone or in combination thereof.

Of the first acid gas adsorption material, methyldiethylamine, branched polyethyleneimine, and an organic/inorganic compound having imparted thereto a tertiary amino group as a substituent are preferred.

The second acid gas adsorption material that can adsorb CO₂ typically contains a primary amino group and/or a secondary amino group. The second acid gas adsorption material contains a primary amino group and/or a secondary amino group, and does not contain a tertiary amino group.

An example of the second acid gas adsorption material is a nitrogen-containing compound having a primary amino group and/or a secondary amino group.

Specific examples of the nitrogen-containing compound having a primary amino group and/or a secondary amino group include: primary amines, such as monoethanolamine and polyvinylamine; secondary amines, such as diethanolamine, a cyclic amine, and N-(3-aminopropyl)diethanolamine; ethylene amine compounds such as tetraethylenepentamine; amino silane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; ethyleneimine; a linear polyethyleneimine; a polyamidoamine having a primary amino group and/or a secondary amino group; a polyvinylamine having a primary amino group and/or a secondary amino group; and an organic/inorganic compound having imparted thereto a primary amino group and/or a secondary amino group as a substituent. Such second acid gas adsorption materials may be used alone or in combination thereof.

Of the second acid gas adsorption materials, monoethanolamine, a cyclic amine, diethanolamine, tetraethylenepentamine, ethyleneimine, linear polyethyleneimine, and an organic/inorganic compound having imparted thereto a primary amino group and/or a secondary amino group as a substituent are preferred.

In one embodiment, the first acid gas adsorption material is methyldiethylamine, and the second acid gas adsorption material is polyethyleneimine. When the first acid gas adsorption material and the second acid gas adsorption material are in the above-mentioned specific combination, the CO₂ adsorption capacity and the CO₂ adsorption force of the acid gas adsorption part can be ensured in a well-balanced manner, and thus a further improvement in adsorption performance of the entire acid gas adsorption device can be achieved.

In one embodiment, the acid gas adsorption device **100** includes the acid gas adsorption part **1** including the first adsorption portion **11** and the second adsorption portion **12;** and one case **2.** The case **2** houses the acid gas adsorption part **1.** In other words, the one case **2** houses the first adsorption portion **11** and the second adsorption portion **12** together. As compared to a case in which the first adsorption portion and the second adsorption portion are housed in different cases, housing the first adsorption portion and the second adsorption portion together in one case enables a reduction in size of the acid gas adsorption device. Thus, facility cost can be kept low. Further, the amount of capture of the acid gas per area can be increased.

In the illustrated example, the case **2** has a tubular shape extending in the direction of passage of the fluid. An upstream end portion of the case **2** in the direction of passage of the fluid is formed as a first opening **21.** A downstream end portion of the case **2** in the direction of passage of the fluid is formed as a second opening **22.** The acid gas adsorption part **1** is arranged between the first opening **21** and the second opening **22** in an internal space of the case **2.** The first adsorption portion **11** is arranged between the first opening **21** and the second adsorption portion **12.** The second adsorption portion **12** is arranged on a side opposite to the first opening **21** with respect to the first adsorption portion **11.** The fluid can pass through each of the first opening **21** and the second opening **22.** The fluid containing the acid gas is supplied to the first adsorption portion **11** via the first opening **21.** The fluid that has passed through the first adsorption portion **11** and the second adsorption portion **12** in the stated order is discharged from the second opening **22.**

The first adsorption portion **11** includes an upstream end surface **1a** of the acid gas adsorption part **1** in the direction of passage of the fluid. The second adsorption portion **12** includes a downstream end surface **1b** of the acid gas adsorption part **1** in the direction of passage of the fluid. The direction of passage of the fluid is typically orthogonal to each of the upstream end surface **1a** and the downstream end surface **1b** of the acid gas adsorption part **1.**

A dimension of the acid gas adsorption part **1** in the direction of passage of the fluid is not limited to any particular dimension as long as fan driving power is not increased due to a pressure loss, and is, for example, 0.5 m or more, preferably 0.6 m or more, and is, for example, 2.0 m or less, preferably 1.0 m or less. A dimension of the acid gas adsorption part **1** in a direction orthogonal to the direction of passage of the fluid is not limited to any particular dimension, and is, for example, 1.5 m or more, preferably 2.0 m or more, and is, for example, 4.0 m or less, preferably 3.0 m or less.

When a full length of the case 2 in the direction of passage of the fluid is defined as 100%, a dimension ratio of each of the first adsorption portion **11** and the second adsorption portion **12** is, for example, from 10% to 90%, preferably from 20% to 80%, more preferably from 30% to 70%.

When the dimension ratio of each of the first adsorption portion and the second adsorption portion to the case falls within the above-mentioned ranges, a large acid gas adsorption capacity can be ensured while an excellent adsorption force is maintained in the entire acid gas adsorption device.

A distance between the first opening **21** and the upstream end surface **1a** of the first adsorption portion **11** in the direction of passage of the fluid is, for example, 1 cm or more, preferably 5 cm or more, more preferably 10 cm or more. Further, a distance between the downstream end surface **1b** of the second adsorption portion **12** and the second opening **22** in the direction of passage of the fluid is, for example, 1 cm or more, preferably 5 cm or more, more preferably 10 cm or more.

When the distance between the first opening and the upstream end surface and/or the distance between the downstream end surface and the second opening are ensured as described above, an influence of turbulence that may be generated at the first opening and the second opening can be reduced, and hence an increase in energy cost due to a pressure loss in the first adsorption portion and the second adsorption portion can be suppressed.

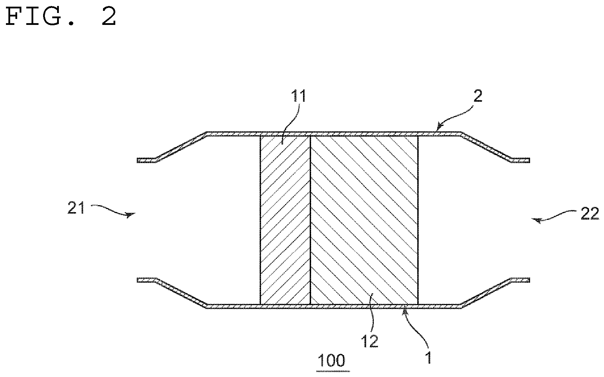

The acid gas adsorption part **1** may be formed by integrally forming the first adsorption portion **11** and the second adsorption portion **12** as illustrated in FIG. **2****,** or may be divided into the first adsorption portion **11** and the second adsorption portion **12** in the direction of passage of the fluid as illustrated in FIG. **1****.**

In one embodiment, the acid gas adsorption part **1** is divided into the first adsorption portion **11** and the second adsorption portion **12** in the direction of passage of the fluid so that the first adsorption portion **11** and the second adsorption portion **12** are formed as separate bodies (see FIG. **1**). When the first adsorption portion and the second adsorption portion are separated from each other, the first adsorption portion and the second adsorption portion can be separately and smoothly produced as compared to a case in which the first adsorption portion and the second adsorption portion are produced integrally.

A gap may be defined between the first adsorption portion **11** and the second adsorption portion **12** in the direction of passage of the fluid. Generally, in the acid gas adsorption part, the fluid more easily flows in the vicinity of a center and less easily flows in outer areas. In this regard, when a gap is defined between the first adsorption portion and the second adsorption portion, a variation in flow rate of the fluid in the acid gas adsorption part can be reduced. A dimension of the gap in the direction of passage of the fluid is, for example, 30% or less, preferably 10% or less with respect to the full length of the acid gas adsorption part in the direction of passage of the fluid (sum of the dimension of the first adsorption portion and the dimension of the second adsorption portion in the direction of passage of the fluid). When the dimension of the gap is equal to or less than the upper limit described above, stagnation of the fluid between the first adsorption portion and the second adsorption portion can be suppressed. Hence, the fluid is allowed to smoothly flow from the first adsorption portion to the second adsorption portion.

Any appropriate values may be used for the dimensions of the first adsorption portion **11** and the second adsorption portion **12** in the direction of passage of the fluid in accordance with the acid gas adsorption materials used therefor, respectively. In one embodiment, the dimension of the first adsorption portion **11** in the direction of passage of the fluid is longer than the dimension of the second adsorption portion **12.** The dimension of the first adsorption portion **11** in the direction of passage of the fluid is, for example, 50% or more, preferably 60% or more, and is, for example, 90% or less, preferably 80% or less with respect to the full length of the acid gas adsorption part **1** (sum of the dimension of the first adsorption portion and the dimension of the second adsorption portion). The dimension of the second adsorption portion **12** in the direction of passage of the fluid is, for example, 10% or more, preferably 30% or more, and is, for example, 50% or less, preferably 40% or less with respect to the full length of the acid gas adsorption part **1.**

When the dimension of the first adsorption portion and/or the dimension of the second adsorption portion falls within the above-mentioned ranges, the improvement in acid gas adsorption efficiency can be stably achieved.

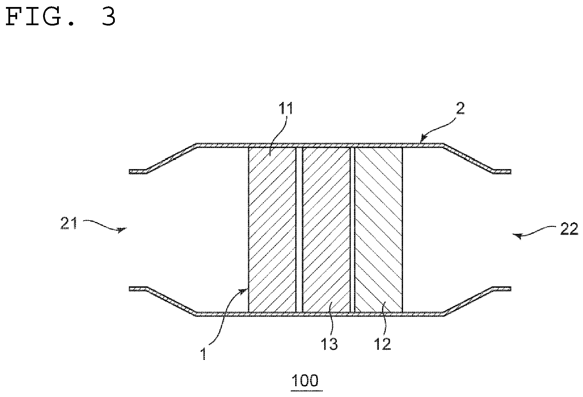

As illustrated in FIG. **3****,** in one embodiment, the acid gas adsorption part **1** further includes a third adsorption portion **13** arranged between the first adsorption portion **11** and the second adsorption portion **12.** With this arrangement, the first adsorption portion, the second adsorption portion, and the third adsorption portion can be separately and smoothly produced as compared to a case in which the acid gas adsorption part is produced as one integral body.

A gap may be defined between the first adsorption portion **11** or the second adsorption portion **12** and the third adsorption portion **13** in the direction of passage of the fluid. Ranges of a dimension of the gap between the first adsorption portion **11** or the second adsorption portion **12** and the third adsorption portion **13** are the same as the above-mentioned ranges of the dimension of the gap between the first adsorption portion **11** and the second adsorption portion **12.**

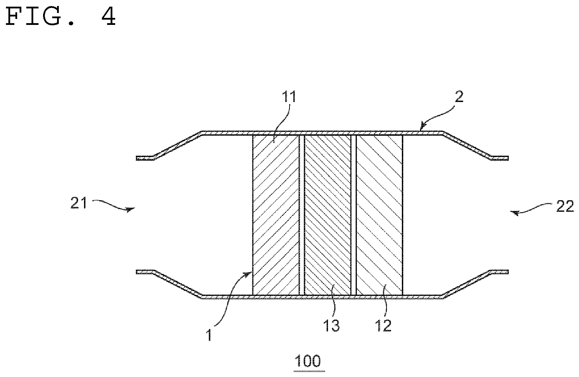

The third adsorption portion **13** may include the same acid gas adsorption material as that of the first adsorption portion **11** as illustrated in FIG. **3****,** or may include a mixture of the acid gas adsorption material of the first adsorption portion **11** and the acid gas adsorption material of the second adsorption portion 12 as illustrated in FIG. **4****.**

In one embodiment, the third adsorption portion **13** includes an acid gas adsorption material different from the acid gas adsorption material of the first adsorption portion **11** and the acid gas adsorption material of the second adsorption portion **12** (see FIG. **4**).

The third adsorption portion 13 preferably includes a third acid gas adsorption material. An adsorption force of the third acid gas adsorption material is larger than that of the first acid gas adsorption material and smaller than that of the second acid gas adsorption material. An adsorption capacity of the third acid gas adsorption material is smaller than that of the first acid gas adsorption material and larger than that of the second acid gas adsorption material. According to the configuration described above, the first acid gas adsorption material, the third acid gas adsorption material, and the second acid gas adsorption material are arranged so that the adsorption force for the acid gas increases in the stated order. Thus, the CO₂ adsorption capacity and the CO₂ adsorption force in the acid gas adsorption part can be ensured in a further well-balanced manner. Thus, a further improvement in acid gas adsorption efficiency of the acid gas adsorption device can be achieved.

The CO₂ adsorption capacity of the third acid gas adsorption material is, for example, 1.2 mol/kg-adsorption material or more, preferably 1.7 mol/kg-adsorption material or more, more preferably 2.2 mol/kg-adsorption material or more. An acid gas concentration at equilibrium (CO₂ concentration at equilibrium) of the third acid gas adsorption material is, for example, 150 ppm or less, preferably 125 ppm or less, more preferably 100 ppm or less, and is, for example, 75 ppm or more. A specific example of the third acid gas adsorption material is polyethyleneimine.

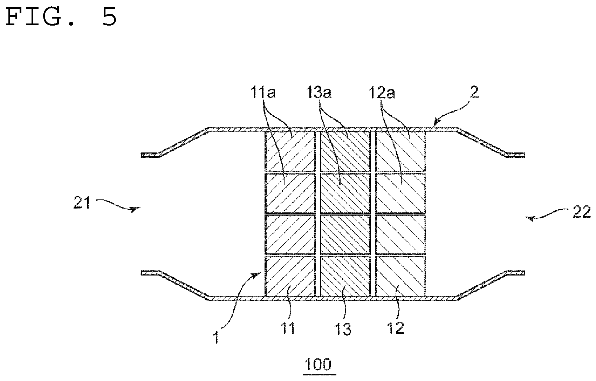

As illustrated in FIG. **5****,** the first adsorption portion **11** may be divided into a plurality of first blocks **11a** in the direction orthogonal to the direction of passage of the fluid. In other words, the first adsorption portion **11** is formed of the plurality of first blocks **11a** arranged in the direction orthogonal to the direction of passage of the fluid. Thus, the first blocks, each being relatively small, are produced to form the first adsorption portion. Accordingly, as compared to a case in which the first adsorption portion is produced as one body, the first adsorption portion can easily be produced.

A dimension of the first block **11a** in the direction of passage of the fluid is, for example, 0.10 m or more, preferably 0.15 m or more, and is, for example, 0.30 m or less, preferably 0.20 m or less. A dimension of the first block **11a** in the direction orthogonal to the direction of passage of the fluid is, for example, 0.10 m or more, preferably 0.15 m or more, and is, for example, 0.80 m or less, preferably 0.60 m or less.

Adjacent first blocks **11a** among the plurality of first blocks **11a** may define a gap therebetween or may be in contact with each other in the direction orthogonal to the direction of passage of the fluid.

In the illustrated example, the first adsorption portion **11** is divided into four blocks in the direction (up-and-down direction on the drawing sheet) orthogonal to the direction of passage of the fluid. The number of division of the first adsorption portion in the direction orthogonal to the direction of passage of the fluid is not limited to the number described above. Further, the first adsorption portion **11** may also be divided into a plurality of blocks in the direction (depth direction on the drawing sheet) orthogonal to the direction of passage of the fluid. The number of division of the first adsorption portion in the direction orthogonal to the direction of passage of the fluid is, for example, 2 or more and 300 or less.

Further, all the plurality of first blocks **11a** may include the same first acid gas adsorption material, or some of the plurality of first blocks **11a** may include a different first acid gas adsorption material.

In one embodiment, the second adsorption portion **12** is divided into a plurality of second blocks **12a** in the direction orthogonal to the direction of passage of the fluid. The second adsorption portion **12** is formed of the plurality of second blocks **12a** arranged in the direction orthogonal to the direction of passage of the fluid. Thus, the second blocks, each being relatively small, are produced to form the second adsorption portion. Accordingly, the second adsorption portion can easily be produced.

Ranges of the dimensions of the second block **12a** are the same as the above-mentioned ranges of the dimensions of the first block **11a.**

Adjacent second blocks **12a** among the plurality of second blocks **12a** may define a gap therebetween or may be in contact with each other in the direction orthogonal to the direction of passage of the fluid.

In the illustrated example, the second adsorption portion **12** is divided into four blocks in the direction (up-and-down direction on the drawing sheet) orthogonal to the direction of passage of the fluid. The number of division of the second adsorption portion in the direction orthogonal to the direction of passage of the fluid is not limited to the number described above. Further, the second adsorption portion **12** may also be divided into a plurality of blocks in the direction (depth direction on the drawing sheet) orthogonal to the direction of passage of the fluid. The number of division of the second adsorption portion in the direction orthogonal to the direction of passage of the fluid is, for example, 2 or more and 300 or less, preferably is the same as the number of division of the first adsorption portion.

Further, all the plurality of second blocks **12a** may include the same second acid gas adsorption material, or some of the plurality of second blocks **12a** may include a different second acid gas adsorption material.

In one embodiment, the third adsorption portion **13** is divided into a plurality of third blocks **13a** in the direction orthogonal to the direction of passage of the fluid. The third adsorption portion **13** is formed of the plurality of third blocks **13a** arranged in the direction orthogonal to the direction of passage of the fluid. Thus, the third blocks, each being relatively small, are produced to form the third adsorption portion. Accordingly, the third adsorption portion can easily be produced.

Ranges of the dimensions of the third block **13a** are the same as the above-mentioned ranges of the dimensions of the first block **11a.**

Adjacent third blocks **13a** among the plurality of third blocks **13a** may define a gap therebetween or may be in contact with each other in the direction orthogonal to the direction of passage of the fluid.

In the illustrated example, the third adsorption portion **13** is divided into four blocks in the direction (up-and-down direction on the drawing sheet) orthogonal to the direction of passage of the fluid. The number of division of the third adsorption portion in the direction orthogonal to the direction of passage of the fluid is not limited to the number described above. Further, the third adsorption portion **13** may also be divided into a plurality of blocks in the direction (depth direction on the drawing sheet) orthogonal to the direction of passage of the fluid. The number of division of the third adsorption portion in the direction orthogonal to the direction of passage of the fluid is, for example, 2 or more and 300 or less, preferably is the same as the number of division of the first adsorption portion.

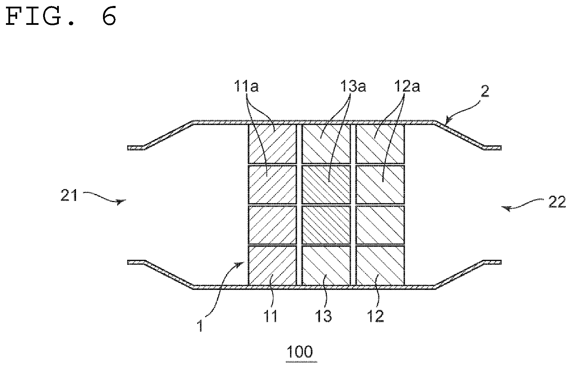

Further, all the plurality of third blocks **13a** may include the same acid gas adsorption material, or some of the plurality of third blocks **13a** may include a different acid gas adsorption material. In FIG. **6****,** the third blocks **13a** positioned in a central area and the third blocks **13a** positioned in outer areas include acid gas adsorption materials different from each other. More specifically, in the third adsorption portion **13,** the third blocks **13a** positioned in the central area include the above-mentioned third acid gas adsorption material, and the third blocks **13a** positioned in the outer areas include the above-mentioned second acid gas adsorption material.

In FIG. **3** to FIG. **6****,** only the third adsorption portion **13** is arranged between the first adsorption portion **11** and the second adsorption portion **12.** However, an adsorption portion can be further provided between the first adsorption portion **11** and the second adsorption portion **12.** Although not shown, the acid gas adsorption part **1** can include the third adsorption portion to an n-th adsorption portion between the first adsorption portion **11** and the second adsorption portion **12.** The n-th adsorption portion includes an n-th acid gas adsorption material. Each of the n-th adsorption portions may be divided into a plurality of n-th blocks in the direction orthogonal to the direction of passage of the fluid in the same manner as described above. The number "n" is, for example, 4 or more and 30 or less. When the acid gas adsorption part includes the third adsorption portion to the n-th adsorption portion, it is preferred that an adsorption force of the acid gas adsorption material in the adsorption portion closer to the downstream side in the direction of passage of the fluid be larger.

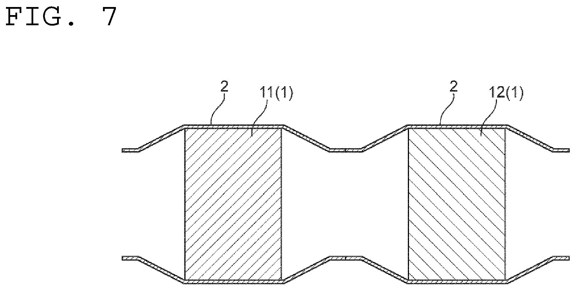

In the acid gas adsorption device **100** illustrated in FIG. **1** to FIG. **6****,** the acid gas adsorption part **1** housed in one case **2** includes the first adsorption portion **11** and the second adsorption portion **12.** However, the arrangement of the first adsorption portion and the second adsorption portion is not limited thereto. As illustrated in FIG. **7****,** two cases **2** may be connected in series in the direction of passage of the fluid so that the first adsorption portion **11** is housed in the case **2** on the upstream side and the second adsorption portion **12** is housed in the case **2** on the downstream side. With this arrangement as well, as in the embodiment described above, the improvement in adsorption performance of the acid gas adsorption device can be achieved.

Now, a specific configuration of the acid gas adsorption part is described.

### B. Acid Gas Adsorption Part

As described above, the acid gas adsorption part **1** includes at least the first adsorption portion **11** and the second adsorption portion **12.** Further, the acid gas adsorption part **1** may include the third adsorption portion **13** to the n-th adsorption portion. The first to the n-th adsorption portions typically have the same configuration except for a kind of the acid gas adsorption material. Further, the first adsorption portion **11** (integrally formed) illustrated in FIG. **1** and the first block **11a** illustrated in FIG. **5** have the same configuration except for a difference in size. Thus, the configuration of the first block **11a** illustrated in FIG. **5** is described in detail below.

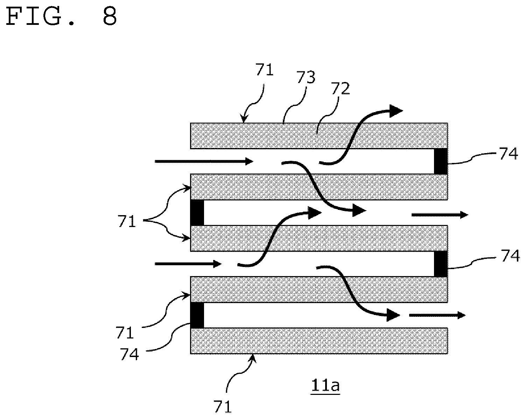

In one embodiment, as illustrated in FIG. **8****,** the first block **11a** includes a plurality of adsorption material layers **71.**

The plurality of adsorption material layers **71** are stacked in a thickness direction thereof so as to be spaced apart from each other. In the illustrated example, five adsorption material layers **71** are arranged in parallel. However, the number of adsorption material layers **71** is not limited thereto. The number of adsorption material layers **71** is, for example, 5 or more, preferably 10 or more, more preferably 20 or more. A distance between adjacent adsorption material layers **71** among the plurality of adsorption material layers **71** is, for example, 0.5 cm or more and 1.5 cm or less.

Each of the plurality of adsorption material layers **71** includes a flexible fiber member **73** and a plurality of pellet-like adsorption materials **72.**

The flexible fiber member **73** permits passage of gas and restricts passage of the pellet-like adsorption materials. The flexible fiber member **73** is typically formed in a hollow shape (bag shape) that allows the plurality of pellet-like adsorption materials **72** to be contained therein. The flexible fiber member **73** may be a fabric or a non-woven fabric. Examples of a material for the flexible fiber member **73** include organic fibers and natural fibers, preferably, a polyethylene terephthalate fiber, a polyethylene fiber, and a cellulosic fiber. A thickness of the flexible fiber member **73** is, for example, 25 µm or more and 500 µm or less.

The plurality of pellet-like adsorption materials **72** are filled in the flexible fiber member **73** having a hollow shape (bag shape). The pellet-like adsorption material **72** serves as an acid gas adsorption material, and typically serves as a carbon dioxide adsorption material. Examples of a material for the pellet-like adsorption material **72** include a material modified with the above-mentioned acid gas adsorption material (the first acid gas adsorption material or the second acid gas adsorption material), preferably cellulose modified with the above-mentioned acid gas adsorption material (the first acid gas adsorption material or the second acid gas adsorption material), more preferably nanofibrillated cellulose modified with the above-mentioned acid gas adsorption material (the first acid gas adsorption material or the second acid gas adsorption material). A mean primary particle diameter of the pellet-like adsorption material **72** is, for example, 60 µm or more and 1,200 µm or less. Any appropriate value may be used as a filling ratio of the pellet-like adsorption materials **72** in the adsorption material layer **71.**

The acid gas adsorption device **1** of the illustrated example further includes a plurality of spacers **74.** The spacer **74** is located between adjacent adsorption material layers **71** among the plurality of adsorption material layers **71.** This configuration allows a distance between adjacent adsorption material layers among the adsorption material layers to be stably ensured. In one embodiment, the plurality of adsorption material layers **71** and the plurality of spacers **74** are arranged in a substantially zig-zag pattern when viewed from a direction (depth direction on the drawing sheet of FIG. **1****)** orthogonal to the thickness direction of the adsorption material layers **71.**

As the acid gas adsorption device **1** as described above, there is, for example, a gas separation unit as described in WO 2014/170184 A1. The publication is incorporated herein in its entirety by reference.

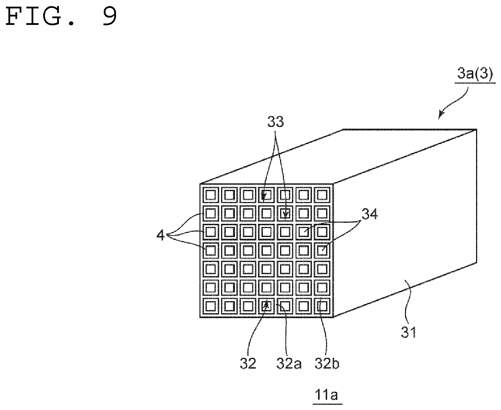

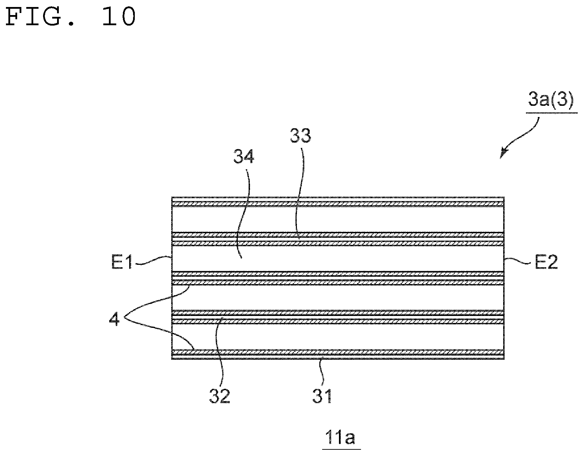

In another embodiment, as illustrated in FIG. **9** and FIG. **10****,** the first block **11a** typically includes a base material 3 and acid gas adsorption layers **4.**

The structure of the base material **3** is not particularly limited, and is, for example, a honeycomb-like structure, a filter structure such as a filtration cloth, or a pellet structure. The acid gas adsorption layer **4** is not particularly limited as long as the layer is arranged on the surface of any such base material **3.**

### B-1. Base Material (Honeycomb-like Base Material)

In one embodiment, the base material **3** is a honeycomb-like base material **3a.** The honeycomb-like base material **3a** includes partition walls **32** that define a plurality of cells **33.**

The cells **33** each extend from a first end surface **E1** (inflow end surface) of the honeycomb-like base material **3a** to a second end surface **E2** (outflow end surface) thereof in the lengthwise direction (axial direction) of the honeycomb-like base material **3a** (see FIG. **10****).** The cells **33** each have any appropriate shape in a cross section in a direction perpendicular to the lengthwise direction of the honeycomb-like base material **3a.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of cells 33 per unit area) may be appropriately set in accordance with purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material 3a has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **3a** of the illustrated example has a prismatic columnar shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

The honeycomb-like base material **3a** typically includes: an outer wall **31;** and a partition wall **32** positioned inside the outer wall **31.** In the illustrated example, the outer wall **31** and the partition wall **32** are integrally formed. The outer wall **31** and the partition wall **32** may be separate bodies.

In the illustrated example, the outer wall **31** has a rectangular cylindrical shape. The thickness of the outer wall **31** may be set to any appropriate thickness. The thickness of the outer wall **31** is, for example, from 0.1 mm to 10 mm.

The partition wall **32** defines the plurality of cells **33.** More specifically, the partition wall 32 has a first partition wall **32a** and a second partition wall **32b** perpendicular to each other, and the first partition wall **32a** and the second partition wall **32b** define the plurality of cells **33.** The sectional shapes of the cells **33** are each a substantially quadrangular shape. The configuration of the partition wall is not limited to the partition wall **32** described above. The partition wall may have a first partition wall extending in a radial direction and a second partition wall extending in a circumferential direction, which define a plurality of cells.

The thickness of the partition wall **32** may be appropriately set in accordance with the applications of the acid gas adsorption device. The thickness of the partition wall **32** is typically smaller than the thickness of the outer wall **31.** The thickness of the partition wall **32** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **32** may be appropriately set in accordance with purposes. The porosity of the partition wall **32** is, for example, 15% or more, preferably 20% or more, and is, for example, 70% or less, preferably 45% or less. The porosity may be measured, for example, by mercury porosimetry.

The bulk density of the partition wall **32** may be appropriately set in accordance with purposes. The bulk density is, for example, 0.10 g/cm³ or more, preferably 0.20 g/cm³ or more, and is, for example, 0.60 g/cm³ or less, preferably 0.50 g/cm³ or less. The bulk density may be measured, for example, by mercury porosimetry.

A material for forming the partition wall **32** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **3a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **3a** is produced. When the firing is adopted, the body is fired at, for example, from 1,200°C to 1,500°C. A firing time period is, for example, 1 hour or more and 20 hours or less.

### B-2. Acid Gas Adsorption Layer (Carbon Dioxide Adsorption Layer)

In one embodiment, the acid gas adsorption layer **4** is formed on the surface of the partition wall **32.** In the honeycomb-like base material **3a,** a flow passage **34** is formed in a portion (typically, a center portion) in a cross section of the cell **33** in which the acid gas adsorption layer **4** is not formed. The acid gas adsorption layer **4** may be formed on the entire inner surface of the partition wall **32** (specifically, so as to surround the flow passage **34)** as in the illustrated example, or may be formed on part of the surface of the partition wall. When the acid gas adsorption layer **4** is formed on the entire inner surface of the partition wall **32,** an improvement in acid gas (typically, CO₂) adsorption efficiency can be achieved.

The flow passage **34** extends from the first end surface **E1** (inflow end surface) to the second end surface **E2** (outflow end surface) as with the cells **33.** Examples of the sectional shape of the flow passage **34** include the same sectional shapes as those of the cells **33** described above. Of those, for example, a hexagon or a quadrangle is preferred, and a square, a rectangle, or a hexagon is more preferred. The sectional shapes and sizes of the flow passage **34** may be all the same, or may be at least partly different.

The fluid containing the acid gas is typically supplied to the cells 33 (more specifically, the flow passages **34**) in an adsorption step described later.

The acid gas adsorption layer **4** includes the acid gas adsorption material in accordance with the acid gas to be adsorbed. The acid gas adsorption layers **4** of the first adsorption portion **11** (first block **11a**) include the above-mentioned first acid gas adsorption material. The acid gas adsorption layers **4** of the second adsorption portion **12** (second block **12a**) include the above-mentioned second acid gas adsorption material.

In one embodiment, the acid gas adsorption material layer **4** includes a porous carrier in addition to the above-mentioned acid gas adsorption material (the first acid gas adsorption material or the second acid gas adsorption material). In this case, the acid gas adsorption material is typically supported by the porous carrier to face the flow passage. When the acid gas adsorption material layer includes the porous carrier, the escape of the acid gas adsorption material from the acid gas adsorption material layer can be prevented in the adsorption step and/or the desorption step.

The porous carrier may form mesopores in the acid gas adsorption material layer. Examples of the porous carrier include: metal organic frameworks (MOF), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOF), activated carbon, PVDF, zeolite, mesoporous silica, and mesoporous alumina are preferred. Those porous carriers may be used alone or in combination thereof. A material different from that of the acid gas absorption material is preferably adopted for the porous carrier.

The BET specific surface area of the porous carrier is, for example, 50 m²/g or more, preferably 500 m²/g or more. When the surface area of the porous carrier is equal to or more than the above-mentioned lower limits, the acid gas adsorption material can be stably supported, and hence an improvement in acid gas adsorption efficiency can be achieved. The upper limit of the BET specific surface area of the porous carrier is typically 2,000 m²/g or less.

When the acid gas adsorption material layer includes the acid gas adsorption material and the porous carrier, the content ratio of the total of the acid gas adsorption material and the porous carrier in the acid gas adsorption material layer is, for example, 30 mass% or more, preferably 50 mass% or more, and is, for example, 100 mass% or less, preferably 99 mass% or less.

The content ratio of the acid gas adsorption material in the acid gas adsorption material layer is, for example, 30 mass% or more, preferably 50 mass% or more, and is, for example, 99 mass% or less. The content ratio of the porous carrier is, for example, 0.01 part by mass or more, preferably 0.3 part by mass or more, and is, for example, 0.7 part by mass or less, preferably 0.5 part by mass or less with respect to 1 part by mass of the acid gas adsorption material. When the content ratio of the porous carrier falls within the above-mentioned ranges, the acid gas adsorption material can be more stably supported.

Further, the acid gas adsorption material layer may be formed only of the acid gas adsorption material. In this case, the acid gas adsorption material is directly supported by the partition wall **32** to face the flow passage. When the acid gas adsorption material layer is formed only of the acid gas adsorption material, the content ratio of the acid gas adsorption material in the acid gas adsorption material layer is typically 95.0 mass% or more and 100 mass% or less. When the content ratio of the acid gas adsorption material falls within the above-mentioned range, excellent acid gas adsorption efficiency can be stably ensured.

Such an acid gas adsorption material layer is typically produced by the following method. A solution of the acid gas adsorption material is prepared by dissolving the above-mentioned acid gas adsorption material in a solvent. Further, the above-mentioned porous carrier is added to the solvent as required. The order of addition of the acid gas adsorption material and the porous carrier is not limited to any particular order. After that, the solution of the acid gas adsorption material is applied onto the base material (specifically, the partition walls), and the coating film is then dried, and is sintered as required. Thus, the acid gas adsorption material layer is formed.

### C. Method of Capturing Acid Gas

Next, a method of capturing an acid gas with use of the acid gas adsorption device according to one embodiment of the present invention is described. The method of capturing an acid gas typically includes the adsorption step and the desorption step in the stated order.

In the adsorption step, the fluid containing the acid gas is supplied to the acid gas adsorption part 1 adjusted to a predetermined adsorption temperature. At this time, the fluid containing the acid gas first flows into the first adsorption portion **11** (more specifically, the flow passages **34** of the first blocks **11a).** As a result, the first acid gas adsorption material of the first adsorption portion **11** adsorbs a relatively large volume of the acid gas from the fluid containing the acid gas (typically, CO₂) at a relatively high concentration. After that, the fluid now having a decreased concentration of the acid gas flows into the second adsorption portion **12** (more specifically, the flow passages **34** of the second blocks **12a).** As a result, the second acid gas adsorption material of the second adsorption portion **12** stably adsorbs the acid gas from the fluid containing the acid gas (typically, CO₂) at a relatively low concentration. Thus, the acid gas is efficiently adsorbed from the fluid supplied to the acid gas adsorption part.

A temperature (adsorption temperature) of the acid gas adsorption part in the adsorption step is, for example, 0°C or more, preferably 10°C or more, and is, for example, 50°C or less, preferably 40°C or less. In one embodiment, the adsorption temperature is equal to an outside air temperature. An operation time period of the adsorption step (adsorption time) is, for example, 15 minutes or more, preferably 30 minutes or more, and is, for example, 3 hours or less, preferably 2 hours or less.

When the adsorption temperature and/or the adsorption time falls within the above-mentioned ranges, the acid gas adsorption material can efficiently adsorb the acid gas.

An acid gas adsorption rate in the adsorption step (=100-(concentration of the acid gas in the fluid having passed through the acid gas adsorption part/concentration of the acid gas in the fluid before being supplied to the acid gas adsorption partx100)) is, for example, 60% or more, preferably 75% or more, more preferably 80% or more, and is, for example, 90% or less.

Next, in the desorption step, the acid gas adsorption part 1 is typically heated to a desorption temperature exceeding the adsorption temperature. More specifically, in the desorption step, after the temperature of the acid gas adsorption part **1** is raised to the adsorption temperature, the acid gas adsorption part **1** is maintained at the desorption temperature for predetermined desorption time. As a result, the acid gas, which has been adsorbed by the acid gas adsorption material (the first acid gas adsorption material and the second acid gas adsorption material) in the adsorption step, is desorbed from the acid gas adsorption material. Thus, the desorbed acid gas can be captured.

In one embodiment, in the desorption step, the desorbed gas is supplied to the acid gas adsorption part 1 so as to pass through the first adsorption portion **11** and the second adsorption portion **12** in the stated order. As a result, the desorbed acid gas is captured together with the desorbed gas. The gas captured in the desorption step is sometimes referred to as "captured gas." The desorbed gas is preferably a captured gas that has previously been captured by the acid gas adsorption device. The use of the captured gas as the desorbed gas enables achievement of an increase in concentration of the acid gas in the captured gas.

In the desorption step, the acid gas can also be captured without using the desorbed gas. For example, the desorbed acid gas may be sucked and captured by a decompression pump. Further, the desorbed gas and the decompression pump can be used in combination.

The temperature of the acid gas adsorption part in the desorption step (desorption temperature) is, for example, 70°C or more, preferably 80°C or more, and is, for example, 200°C or less, preferably 110°C or less. An operation time period of the desorption step (desorption time for which the acid gas adsorption part is maintained at the desorption temperature) is, for example, 1 minute or more, preferably 5 minutes or more, and is, for example, 1 hour or less, preferably 30 minutes or less. When the desorption temperature and/or the desorption time falls within the above-mentioned ranges, the acid gas can be sufficiently desorbed from each of the first acid gas adsorption material and the second acid gas adsorption material.

With the method described above, the acid gas can be efficiently captured. The adsorption step and the desorption step are preferably repeated in the order.

### Industrial Applicability

The acid gas adsorption device according to the embodiment of the present invention can be used for separation and capture of an acid gas, and particularly, can be suitably used for a Carbon dioxide Capture, Utilization and Storage (CCUS) cycle.

### Reference Signs List

- **1**: acid gas adsorption part
- **11**: first adsorption portion
- **12**: second adsorption portion

## Claims

1. An acid gas adsorption device, comprising:
an acid gas adsorption part, which includes an acid gas adsorption material capable of adsorbing an acid gas, and allows passage of a fluid in a predetermined direction; and
one case,
wherein the acid gas adsorption part includes:
a first adsorption portion including a first acid gas adsorption material having a relatively small adsorption force for adsorbing the acid gas and a relatively large adsorption capacity for the acid gas; and
a second adsorption portion arranged on a downstream side of the first adsorption portion in the direction of passage of the fluid, the second adsorption portion including a second acid gas adsorption material having a relatively large adsorption force for adsorbing the acid gas and a relatively small adsorption capacity for the acid gas, and
wherein the one case houses the first adsorption portion and the second adsorption portion together.

2. The acid gas adsorption device according to claim 1, wherein the acid gas is carbon dioxide.

3. The acid gas adsorption device according to claim 2,
wherein an acid gas concentration at equilibrium of the first acid gas adsorption material exceeds 100 ppm, and
wherein an acid gas concentration at equilibrium of the second acid gas adsorption material is 100 ppm or less.

4. The acid gas adsorption device according to claim 3,
wherein the first acid gas adsorption material contains a tertiary amino group, and
wherein the second acid gas adsorption material contains a primary amino group and/or a secondary amino group.

5. The acid gas adsorption device according to any one of claims 1 to 4, wherein the first adsorption portion is divided into a plurality of blocks in a direction orthogonal to the direction of passage of the fluid.

6. The acid gas adsorption device according to any one of claims 1 to 4, wherein the second adsorption portion is divided into a plurality of blocks in a direction orthogonal to the direction of passage of the fluid.
